# EUROPEAN PATENT SPECIFICATION

(11) **EP 3 510 659 B1**
(45) Date of publication and mention of the grant of the patent: **04.11.2020**
(21) Application number: 17777965.9
(22) Date of filing: 06.09.2017
(51) Int. Cl.: H01M 4/1391, H01M 4/1393, H01M 4/62, H01M 10/0525, H01M 4/04, H01M 4/52, H01M 4/50, H01M 4/525, H01M 4/583, H01M 4/58

(54) **USE OF VINYL ACETATE-BASED POLYMERS TO MAKE ELECTRODES FOR LITHIUM-ION BATTERIES**
VERWENDUNG VON VINYLACETATPOLYMEREN ZUR HERSTELLUNG VON ELEKTRODEN FÜR LITHIUM-IONEN-BATTERIEN
UTILISATION DE POLYMÈRES À BASE D'ACÉTATE DE VINYLE POUR FAIRE DES ÉLECTRODES POUR BATTERIES LITHIUM-ION

(30) Priority: 07.09.2016 IT 201600090617
(43) Date of publication of application: 17.07.2019
(73) Proprietor: Vinavil S.p.A., 20159 Milano (IT); Agenzia Nazionale Per Le Nuove Tecnologie, L'Energia E Lo Sviluppo Economico Sostenibile (ENEA), 00196 Roma (IT)
(72) Inventor: PROSINI, Pier Paolo, 00123 Roma (IT); FUSO NERINI, Ivan, 20159 Milano (IT)
(74) Representative: Bianchetti Bracco Minoja S.r.l.
(86) International application number: PCT/IB2017/055363
(87) International publication number: WO 2018/047073

(56) References cited:
- WO-A1-2014/190059
- FR-A1- 2 912 555
- Pier Paolo Prosini ET AL: "A high voltage cathode prepared by using polyvinyl acetate as a binder", Solid State Ionics, 21 March 2015 (2015-03-21), pages 88-93, XP055373170, Retrieved from the Internet: URL:http://www.sciencedirect.com/science/a rticle/pii/S0167273815000892 [retrieved on 2017-05-16] cited in the application

## Description

The present invention relates to the field of rechargeable lithium-ion batteries. Specifically, the invention relates to the use of vinyl acetate-based polymers, which are dispersible in water or other solvents, as binders for the manufacture of electrodes.

### Prior art

Lithium-ion batteries consist of two electrodes, a cathode and an anode, supported by a metal conductor and spaced by a porous separator. The electrodes consist of an active material, an electrical conductor and a polymer binder designed to bind the active material to the electrical conductor. Moreover, the polymer binder causes the electrode coating to adhere to the conductive medium. The performance of a lithium-ion battery is strongly dependent on the electrochemical characteristics of the active materials used to make the electrodes. However, the binder used in the electrode formulation also plays a very important part, because it influences the mechanical and electrical properties of the electrode. A binder suitable for use in lithium-ion technology must possess various characteristics, such as high flexibility, good bonding strength and high electrochemical stability. The binder must interact with both the active material and the electrical conductor. Uniform distribution of said two elements in the electrode can reduce internal resistance and improve the performance of the active material at high discharge currents. Moreover, good adhesion of the electrode composite to the collector current can stabilise the interface between the metal conductor and the electrode, increasing the performance of the battery and extending its life cycle. The choice of binder is important, because it influences the electrode manufacturing process.
In lithium-ion batteries, the anode is represented by a graphite-based intercalation electrode. Graphite, due to its laminar structure, can house the lithium ions, inserting them between its layers, while the electrons are delocalised in the conduction band. During the process of reduction of the lithium ions on a graphite electrode, a series of critically important phenomena take place before the actual intercalation process. These phenomena are electrolyte decomposition, solvent co-intercalation and formation of a film which, by analogy with the behaviour of certain metals, is called passivation. When a graphite electrode is immersed in a non-aqueous electrolyte solution (such as a lithium salt dissolved in an organic carbonate) and its potential is adjusted to values below 100 mV vs. Li, the solvent undergoes a decomposition reaction. Said reaction can lead to the formation of a film on the surface of the graphite, formed by products of degradation of the electrolyte and the solvent, which acts as a solid-electrolyte interphase (SEI) (E. Peled, The Electrochemical Behavior of Alkali and Alkaline Earth Metals in Nonaqueous Battery Systems - The Solid Electrolyte Interphase Model, J. Electrochem. Soc., 126 (1979) 2047-2051). The characteristics of the SEI are that it is a good ion conductor, firmly bonded to the graphite surface, and electrically insulating. The electrolyte decomposition reaction stops when the SEI thickness is sufficient to prevent electron tunnelling. When this takes place, the lithium ions, through the SEI, can reach the surface of the graphite and intercalate in it without further electrolyte decomposition taking place. This interpretation, by Fong et al. (Fong, U. Von Sacken and J. Danh, Studies of Lithium Intercalation into Carbons Using Nonaqueous Electrochemical Cells, J. Electrochem. Soc., 137 (1990) 2009-2013), is generally accepted today to describe the intercalation behaviour of lithium in graphite. Part of the current that passes through the electrode does not contribute to lithium intercalation, but serves for SEI formation. Said fraction cannot be reversibly recovered, and constitutes the fraction of capacity that is irreversibly lost during the first cycle in lithium-ion batteries. As the only source of lithium in lithium-ion batteries is the lithium content of the cathode, the cathode load must be oversized to take account of the irreversible capacity of the graphite. The use of a binder able to form a continuous insulating film could reduce the irreversible capacity of the graphite, reducing the cathode load and increasing the energy density of the battery.

In recent years, there has been a gradual changeover from conventional electrodes based on fluorinated polymers to technologies that use soluble or water-dispersible binders. The elimination of organic solvents makes the manufacture of electrodes an ecological process. For this reason, various water-dispersible binding materials have been proposed to replace the fluorinated polymers conventionally used to make electrodes; examples of said water-dispersible binders include carboxymethylcellulose (CMC) (CN103199233, US20130177812, EP2613388), sodium CMC (CN103165865), styrenebutadiene rubber (SBR) (KR10-2005-0085190, CN1933214, CN100539258, US20070059600), mixtures of sodium CMC and SBR (CN 101286563), polystyrene-butadiene-poly(acrylonitrile-co-acrylamide) rubber, mixtures of polyacrylic acid (PAA), CMC, SBR and polyvinylidene fluoride (PVdF) (US 8092557), and other water-soluble polymers. Among the water-dispersible polymers, polyvinyl acetate (PVA) has been used as precursor of the carbon matrix in lithium ion battery electrodes (US20070212611), and more recently as binder to make cathode electrodes. Although the electrode obtained by coupling PVA with LiFePO₄ demonstrated interesting electrochemical properties (Pier Paolo Prosini, Maria Carewska, Cinzia Cento, Amedeo Masci, Poly vinyl acetate used as a binder for the fabrication of a LiFePO4-based composite cathode for lithium-ion batteries, Electrochimica Acta, Volume 150, 20 December 2014, Pages 129-135), the electrode prepared with LiNi_{0.5}Mn_{1.5}O₄ exhibited a certain instability, especially when the cell voltage reaches very high values (Pier Paolo Prosini, Maria Carewska, Amedeo Masci, A high voltage cathode prepared by using polyvinyl acetate as a binder, Solid State Ionics, Volume 274, June 2015, Pages 88-93).

The need to solve this problem is therefore strongly felt.

### Description of the invention

It has now been discovered that said problem can be eliminated by using polyvinyl acetate (PVA) modified with triacylglycerol (TAG), or a random ethylene-vinyl acetate (EVA) copolymer modified with triacylglycerol (TAG), as binder for the formation of lithium-ion battery electrodes. The polymer binder consists of polymers having an average molecular weight Mw ranging between 10000 and 3000000 Daltons, preferably between 50000 and 1000000 Daltons.

TAG is an additive used as plasticiser in numerous applications. (Hasabnis, A.; Mahajani, S. Entrainer-based reactive distillation for esterification of glycerol with acetic acid, Ind. Eng. Chem. Res.2010, 49, 9058-9067). It is also used to modify the viscosity of liquid fuels (Rahmat, N.; Abdullah, A. Z.; Mohamed, A. R. Recent progress on innovative and potential technologies for glycerol transformation into fuel additives: a critical review, Renewable Sustainable Energy Rev. 2010, 14, 987-1000).

At room temperature it is a colourless oily liquid with a boiling point of 258°C. TAG has a considerable ability to increase the film-forming properties of the polymer (Jie Zhu, Xiaoxi Li, Chen Huang, Ling Chen, Lin Li, Plasticization effect of triacetin on structure and properties of starch ester film, Carbohydrate Polymers, Volume 94, Issue 2, 15 May 2013, Pages 874-881).

The quantity of TAG used for the modification ranges between 0.1 and 20%, preferably between 1 and 10%.

EVA is a random ethylene-vinyl acetate copolymer. It is produced from ethylene (non-polar) and vinyl acetate (VA) (polar) monomer. The presence of the ethylene unit makes it more stable than PVA. EVA copolymers are versatile polymers which can vary considerably in terms of their chemical and physical properties. EVA copolymers can be prepared with an ethylene content ranging between 1 and 40% by weight. The main advantage of EVA copolymers is their wide range of properties, which can be obtained by varying the ethylene content. It is therefore possible to change over from uses requiring rigid plastics to applications requiring products with more elastic properties. The main advantages of EVA include clarity and tenacity, together with great flexibility and the ability to withstand low temperatures.

The subject of the present invention is therefore an electrode composite for lithium batteries comprising an electrochemically active material and an electronic conductor bonded by a polymer binder, characterised in that said polymer binder consists of polyvinyl acetate modified with triacylglycerol (PVA-TAG) or EVA copolymer modified with triacylglycerol (EVA-TAG).

The polymer binder is present in quantities ranging between 1 and 50%, preferably between 5 and 20%.

The electrodes can be made by various techniques: i) preparing an aqueous suspension of the active material (anodic or cathodic), the carbon and the polymer binder and depositing successive layers of the suspension on the conductive electrode. A layer of suspension is deposited, and left to dry allowing the water to evaporate. The operation is repeated several times, until the desired thickness is reached; ii) alternatively, a dense suspension can be prepared with water or another solvent, and the metal conductor covered with said suspension in a single operation; iii) the electrodes based on EVA modified with triacetin can be prepared by hot-forming from mixtures of powders containing the dry polymer, and subjecting the mixture to compression and subsequent calandering. The invention eliminates the need to use organic solvents, thus reducing the costs of manufacturing the electrodes, this reduction being due to the elimination of fluorinated polymers and organic solvents and the process of recovery thereof.

According to the invention, said anode and cathode electrodes consist of an electrochemically active material able to intercalate lithium in percentages ranging between 65% and 95% by weight, a polymer binder in percentages ranging between 2% and 15% by weight, and large-area carbon in percentages ranging between 3% and 20% by weight.

Again according to the invention, said electrochemically active cathode material can be selected from a lithium manganite, lithium cobaltite or lithium nickelite oxide, either alone or mixed, or from a lithiated iron, vanadium, cobalt or manganese phosphate, either alone or mixed, while said electrochemically active anode material can be selected from graphite, carbonaceous materials (such as coke), or materials able to intercalate lithium at low potential (such as lithium titanates and tin, silicon or germanium oxides).

The advantages of the invention and its industrial importance are associated with lower manufacturing costs, little or no environmental impact, the absence of pollutant processes, and the possibility of making devices with improved properties, such as greater utilization of active material at high discharge currents, longer life cycle, and lower irreversible capacity.

The details of the invention will be described below by way of illustrations, with special reference to some figures, wherein:

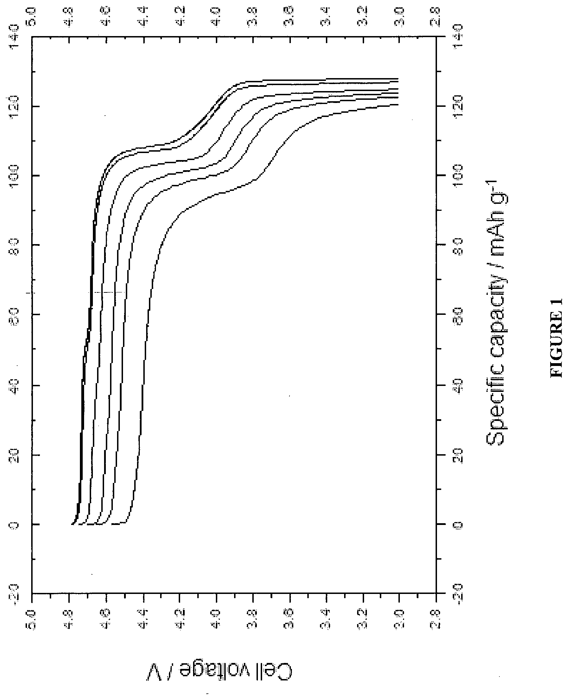

- Figure 1 shows the voltage profiles, as a function of the specific capacity, recorded at different discharge rates, for a cathode electrode made according to the invention containing EVA-TAG as binder and LiNi_{0.5}Mn_{1.5}O₄ as active material, cycled at various discharge rates, namely C/10, C/5, 1C, 2C, 3C and 5C.

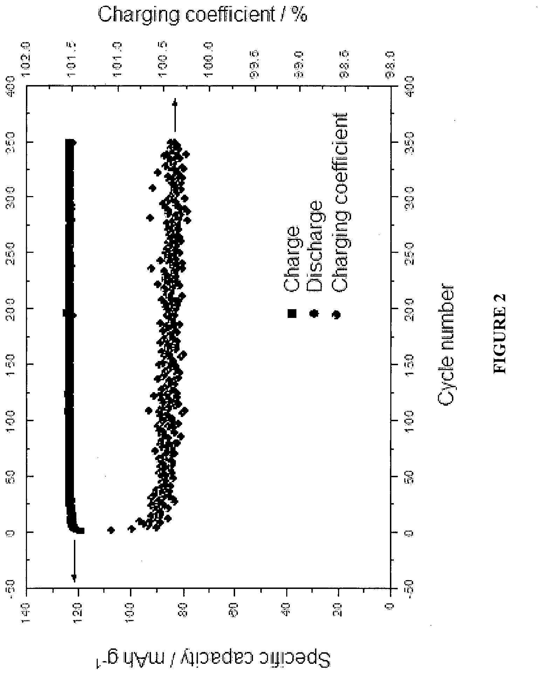

- Figure 2 shows the variation in specific capacity as a function of the number of cycles for a cathode electrode made according to the invention containing EVA-TAG as binder and LiNi_{0.5}Mn_{1.5}O₄ as active material. The electrode was charged galvanostatically at C-rate, and when the voltage reached 4.8 V, potentiostatically until the current fell below C/10 rate. The discharge was conducted under galvanostatic conditions at 3C rate.

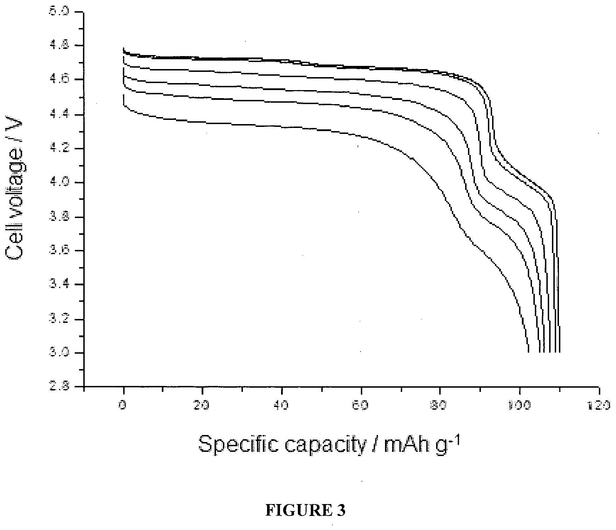

- Figure 3 shows the voltage profiles, as a function of the specific capacity, recorded at different discharge speeds for a cathode electrode made according to the invention, containing PVA-TAG as binder and LiNi_{0.5}Mn_{1.5}O₄ as active material; the electrode was cycled at various discharge rates, namely C/10, C/5, 1C, 2C, 3C and 5C.

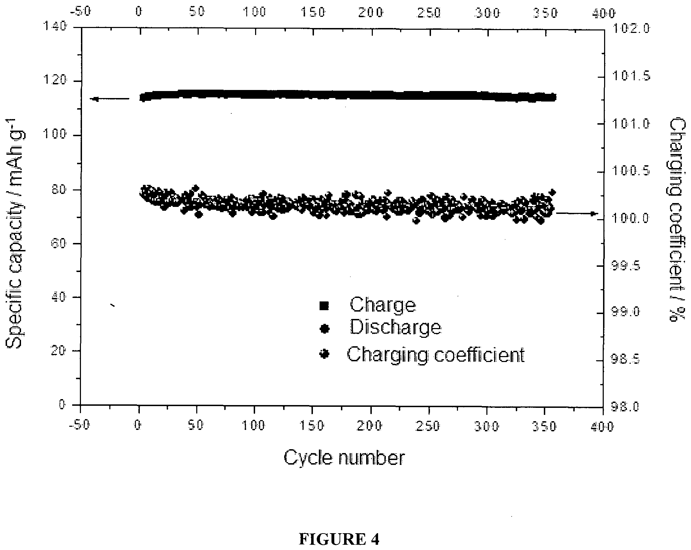

- Figure 4 shows the variation in specific capacity as a function of the number of cycles for a cathode electrode made according to the invention, containing PVA-TAG as binder and LiNi_{0.5}Mn_{1.5}O₄ as active material. The electrode was charged galvanostatically at C-rate, and when the voltage reached 4.8 V, potentiostatically until the current fell below C/10 rate. The discharge was conducted under galvanostatic conditions at 3C rate.

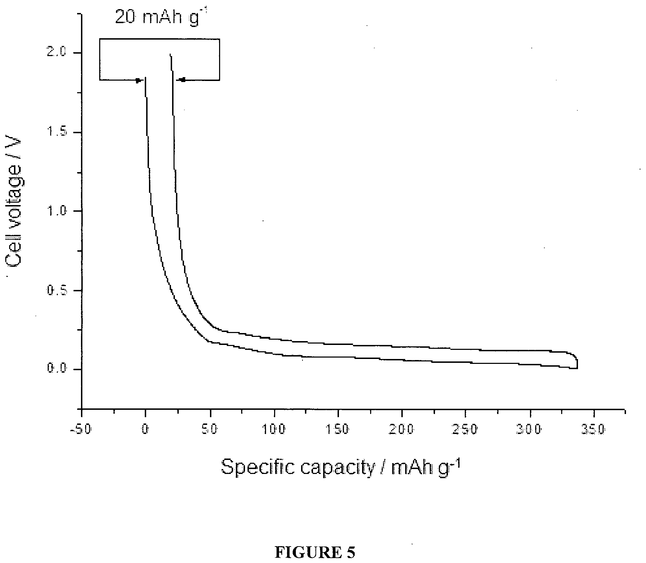

- Figure 5 shows the voltage profiles, as a function of the specific capacity, recorded during the first cycle for an anode electrode made according to the invention, containing EVA-TAG copolymer as binder and graphite as active material, cycled at C/10. The irreversible capacity is 20 mAh per gram less than the 6% of the capacity exhibited during the first discharge cycle.

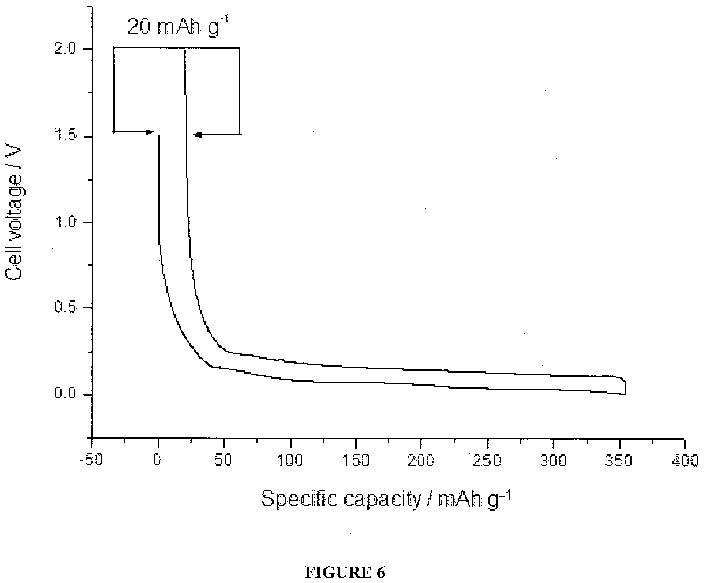

- Figure 6 shows the voltage profiles, as a function of the specific capacity, recorded during the first cycle for an anode electrode made according to the invention, containing PVA-TAG as binder and graphite as active material, cycled at C/10. The irreversible capacity is 20 mAh per gram less than the 6% of the capacity exhibited during the first discharge cycle.

A detailed description of the invention will be given below, with the aid of some examples.

The electrode ribbons are prepared by a process of spreading and drying of the aqueous suspension containing the film-forming polymer. The preparation of the anode and the cathode differ, in that a different active material is used: lithium nickel manganese oxide (LiNi_{0.5}Mn_{1.5}O₄) for the cathode, and graphite for the anode. Both electrodes contain large-area carbon to increase the electric conductivity of the electrode. The active material and the carbon are mixed with a mechanical mill. A suspension of polymer in water is added to the powders, and mixed with a mechanical blade mill. To obtain the composite ribbons, the suspension is spread on a metal support with a paintbrush or roller. After spreading, the suspension is left to dry. The procedure is repeated as often as required to obtain the desired thickness.

The electrochemical characterisation of the electrodes was conducted in lithium cells wherein the metallic lithium was used as both counter-electrode and reference electrode. Fibreglass was used as separator. The cells were filled with a 1.0 M solution of LiPF6 in an ethylene/diethyl carbonate mixture in the volumetric ratio of 1:1.

### Example 1

Preparation of cathode ribbon. 0.78 g of LiNi_{0.5}Mn_{1.5}O₄ and 0.12 g of carbon (Super P, MMM Carbon, Belgium) were weighed and transferred to a mechanical mill. The powders were mixed by operating the mill for a few minutes. An aqueous suspension of polymer (EVA-TAG or PVA-TAG) was prepared by dispersing 0.10 g of polymer with 8 g of water. The dispersion was added to the powder mixture, and mixed by operating the mill for a few minutes. The resulting suspension was used to deposit a thin layer of compound on a sheet of aluminium with an area of 100 cm². After air-drying at 90-100°C, the procedure was repeated as often as required to use up the entire suspension. The composition of the electrode ribbon was 78% by weight of LiNi_{0.5}Mn_{1.5}O₄, 10% by weight of polymer and 12% by weight of carbon. The electrodes were prepared by cutting discs with a diameter of 12 mm from the sheet. The thickness of the electrodes ranged between 60 and 70 microns. The weight of the electrodes ranged between 7.0 and 9.6 mg, corresponding to a specific load of active material ranging between 4.9 and 6.6 mg cm⁻². Before electrochemical characterisation, the electrodes were dried by heating under vacuum at 80°C for 12 h.

### Example 2

Preparation of anode ribbon. The preparation described here relates to a mixture of 1.0 g of graphite and 0.05 g of carbon. The reagents were weighed and transferred to the mill, then mixed by operating the device for a few minutes. The polymer dispersion (EVA-TAG or PVA-TAG) was prepared separately, by placing 0.10 g of polymer and 6 g of water in a glass bottle. The polymer dispersion was then added to the mixture of powders, and the ingredients were mixed by operating the device for a few minutes. The resulting suspension was spread on a copper sheet, covering an area of 100 cm². After air-drying at 130-150°C, the procedure was repeated as often as necessary to use up all the suspension. The composition of the electrode ribbon was 87% by weight of graphite, 8.7% by weight of polymer, and 4.3% by weight of carbon. The electrodes were prepared by cutting discs with a diameter of 12 mm from the sheet. The final thickness of the anode ribbon was about 50-70 µm. The weight of the electrodes ranged between 6.0 and 8.0 mg, corresponding to a specific load of active material ranging between 4.6 and 6.2 mg cm⁻². Before electrochemical characterisation, the electrodes were dried by heating under vacuum at 80°C for 12 h.

## Claims

1. Electrode composite for lithium batteries comprising an electrochemically active material and an electronic conductor bonded by a polymer binder , **characterised in that** said polymer binder consists of either polyvinyl acetate (PVA) modified with triacylglycerol (TAG) or a random ethylene-vinyl acetate (EVA) copolymer modified with triacylglycerol (TAG).

2. Electrode composite for lithium batteries according to claim 1, wherein the polymer binder consists of polyvinyl acetate modified with triacylglycerol (TAG).

3. Electrode composite for lithium batteries according to claim 1, wherein the polymer binder consists of a random ethylene-vinyl acetate (EVA) copolymer modified with triacylglycerol (TAG).

4. Use of the electrode composite material according to any one of claims 1 to 3 in lithium-ion batteries.

## Patentansprüche

1. Elektroden-Verbundstoff für Lithiumbatterien, umfassend ein elektrochemisch aktives Material und einen elektronischen Leiter gebunden durch ein Polymerbindemittel, **dadurch gekennzeichnet, dass** das Polymerbindemittel entweder aus Polyvinylacetat (PVA), modifiziert mit Triacylglycerol (TAG), oder einem statistischen Ethylen-Vinylacetat (EVA)-Copolymer, modifiziert mit Triacylglycerol (TAG), besteht.

2. Elektroden-Verbundstoff für Lithiumbatterien gemäß Anspruch 1, wobei das Polymerbindemittel aus Polyvinylacetat, modifiziert mit Triacylglycerol (TAG), besteht.

3. Elektroden-Verbundstoff für Lithiumbatterien gemäß Anspruch 1, wobei das Polymerbindemittel aus einem statistischen Ethylen-Vinylacetat (EVA)-Copolymer, modifiziert mit Triacylglycerol (TAG), besteht.

4. Verwendung des Elektroden-Verbundstoffmaterials gemäß einem der Ansprüche 1 bis 3 in Lithiumionen-Batterien.

## Revendications

1. Matériau d'électrode composite pour batteries lithium comprenant un matériau actif d'un point de vue électrochimique et un conducteur électronique lié par un liant polymère, **caractérisé en ce que** ledit liant polymère consiste en de l'acétate de polyvinyle (PVA) modifié avec du triacylglycérol (TAG) ou un copolymère aléatoire d'éthylène-acétate de vinyle (EVA) modifié avec du triacylglycérol (TAG).

2. Matériau d'électrode composite pour batteries lithium selon la revendication 1, ledit liant polymère consistant en de l'acétate de polyvinyle modifié avec du triacylglycérol (TAG).

3. Matériau d'électrode composite pour batteries lithium selon la revendication 1, ledit liant polymère consistant en un copolymère aléatoire d'éthylène-acétate de vinyle (EVA) modifié avec du triacylglycérol (TAG).

4. Utilisation du matériau d'électrode composite selon l'une quelconque des revendications 1 à 3 dans des batteries lithium-ion.
